# EUROPÄISCHE PATENTANMELDUNG

(11) **EP 1 037 436 A1**
(43) Veröffentlichungstag der Anmeldung: **20.09.2000**
(21) Anmeldenummer: 99810236.2
(22) Anmeldetag: 17.03.1999
(51) Int. Cl.: H04L 12/58, H04L 9/00

(54) **Kryptographisch gesicherte Stellvertretung in E-Mailsystemen**

(71) Anmelder: Ascom Systec AG, 5506 Mägenwil (CH)
(72) Erfinder: Scheller, Rudolf, CH-5073 Gipf-Oberfrick (CH); Utinger, Christoph, CH-8616 Oetwil am See (CH); Zeller, François, F-5506 Mägenwil (FR); Zimmermann, Daniel, CH-5200 Brugg (CH); Voutsis, Nico, CH-8301 Wallisellen (CH)
(74) Vertreter: Roshardt, Werner Alfred, Dipl.-Phys.

(57) **Zusammenfassung**

Bei der Übertragung einer mit einem "public key"-Verfahren verschlüsselten, elektronischen Nachricht (22) an einen Adressaten mit von diesem definierten Stellvertretern, wird die Nachricht erfindungsgemäss nicht nur mit dem public key des Adressaten (31.1), sondern zusätzlich auch mit jenen der Stellvertreter (31.2 bis 31.5) verschlüsselt. Indem eine Liste der Stellvertreter aller Systembenutzer zentral auf einem Stellvertreter-Server (3) veröffentlicht und verwaltet wird, ist eine vollautomatische Abwicklung dieser Verschlüsselung möglich. Für den Absender einer Nachricht bleibt daher der gesamte Ablauf zum Verschicken einer verschlüsselten E-Mail genau der gleiche, ob nun der Adressat irgendwelche Stellvertreter definiert hat oder nicht.

## Beschreibung

### Technisches Gebiet

Die Erfindung betrifft ein Verfahren zur Übertragung elektronischer Nachrichten zwischen Benutzern eines E-Mailsystems, bei dem zur Gewährleistung der Sicherheitsanforderungen Vertraulichkeit, Authentizität und Integrität eine auf dem "public key"-Verfahren basierende Verschlüsselungsmethode angewendet wird, bei welcher die Verschlüsselung der Nachrichten mit einem Sessionkey erfolgt, der seinerseits mit dem öffentlichen Schlüssel des Adressaten verschlüsselt und mit der Nachricht an den Adressaten mitgeschickt wird. Weiter betrifft die Erfindung ein System zur Durchführung dieses Verfahrens.

### Stand der Technik

Die elektronische Datenübertragung, insbesondere die Kommunikation per E-Mail, hat in den letzten Jahren, nicht zuletzt wegen der immer grösseren Verbreitung des Internet und seiner verschiedenen Dienste, immer mehr zugenommen. Vor allem im Hinblick auf kommerzielle Anwendungen gewinnt daher die Gewährleistung gewisser Sicherheitsanforderungen bei der elektronischen Übertragung von Daten immer mehr an Bedeutung. So ist beispielsweise im Zusammenhang mit Bankgeschäften nicht nur die Vertraulichkeit (niemand ausser dem vom Absender ausdrücklich definierten Empfänger der Nachricht darf diese lesen können), sondern auch die Authentizität (es muss sichergestellt sein, dass sowohl der Empfänger, als auch der Absender einer Nachricht diejenigen sind, für die sie sich ausgeben) und die Integrität (die Nachricht darf auf dem Weg vom Absender zum Empfänger nicht bzw. nicht unbemerkt verändert werden) der übermittelten Nachrichten von höchster Wichtigkeit. Um diese Anforderungen zu gewährleisten, werden verschiedene Verschlüsselungsverfahren eingesetzt.

Eine Methode bilden die klassischen, symmetrischen Verschlüsselungsverfahren. Dabei wird die Nachricht mit einem Sessionkey verschlüsselt und anschliessend über den unsicheren Kanal übertragen. Der Sessionkey, mit dem (und nur mit dem) die Nachricht wieder entschlüsselt werden kann, muss dann auf einem sicheren Weg vom Absender zum Adressaten gebracht werden, welcher damit die Nachricht wieder entziffern kann. Genau diese Übertragung des Sessionkeys ist jedoch das grösste Problem dieses Verfahrens.

Bei den asymmetrischen Verschlüsselungsverfahren besitzt jeder Teilnehmer eines E-Mailsystems zwei komplementäre Schlüssel, einen öffentlichen Schlüssel, den public key (=PUK), der allen anderen Teilnehmern bekannt gemacht und meist auf einem sogenannten Key-Server bereitgestellt wird, und einen privaten Schlüssel, den private key (=PIK), den der Teilnehmer geheim hält. Die Verschlüsselung einer Nachricht geschieht mit einem der beiden Schlüssel eines solchen Schlüsselpaares. Die Entschlüsselung kann dann einzig und allein mit dem komplementären Schlüssel dieses Schlüsselpaares geschehen. Nachteilig dabei ist, dass der Rechenaufwand für die Ver- bzw. Entschlüsselung insbesondere grosser Datenmengen enorm hoch und deshalb oft nicht praktikabel ist. Hinzu kommt, dass nicht immer alle Sicherheitsanforderungen erfüllt werden können. Zu diesem Zweck kann eine Nachricht jedoch zusätzlich zur Verschlüsselung vom Absender auch digital unterschrieben werden. Und um sicher zu sein, dass ein bestimmter PUK auch einer bestimmten Person gehört, kann der Benutzer seinen PUK von einer sogenannten Certification Authority zertifizieren lassen. Dazu wird der PUK zusammen mit Angaben über die Identität des Besitzers von der Certification Authority digital unterschrieben.

Mit den heute üblichen Hybridverfahren lassen sich die Vorteile beider Verschlüsselungsmethoden optimal kombinieren. Zuerst wird die Nachricht mit dem Sessionkey eines symmetrischen Verfahrens verschlüsselt und anschliessend der Sessionkey mit einem asymmetrischen Verfahren. Dann wird die Nachricht zusammen mit dem verschlüsselten Sessionkey zum Adressaten übermittelt. Damit ist eine einfache und trotzdem sichere Übertragung des Sessionkeys möglich und die aufwendige asymmetrische Verschlüsselung wird nur auf kurze Sequenzen angewendet.

Viele der heute verwendeten Mailsysteme bieten einem Systembenutzer neben der gesicherten Kommunikation aber auch die Möglichkeit, Stellvertreter zu definieren, damit die Bearbeitung seiner elektronischen Post auch während seiner Abwesenheit gewährleistet ist. Es ist jedoch nicht möglich, in solchen Mailsystemen asymmetrische Verschlüsselungsverfahren einzusetzen, denn durch die Verschlüsselung mit dem PUK des Adressaten, kann niemand ausser dieser selbst die Nachricht entschlüsseln. Diese Situation: entweder Verschlüsselung ohne Stellvertreterfunktionalität, oder aber Stellvertreterfunktionalität ohne Verschlüsselung, stellt heute in vielen Fällen ein grosses Problem dar.

### Darstellung der Erfindung

Aufgabe der Erfindung ist es, ein Verfahren anzugeben, das es jedem Benutzer eines E-Mailsystems ermöglicht, eigene Stellvertreter zu definieren und das Versenden von elektronischen Nachrichten an einen Empfänger erlaubt, ohne dass sich der Absender der Nachricht darum kümmern muss, ob und wenn ja welche Stellvertreter der Empfänger der Nachricht definiert hat.

Die Lösung der Aufgabe ist durch die Merkmale des Anspruchs 1 definiert. Zur Gewährleistung von Vertraulichkeit, Authentizität und Integrität der zu versendenden Nachrichten werden diese mit einem der bekannten Hybridverfahren verschlüsselt. Damit aber die Nachrichten an einen bestimmten Adressaten, der seine elektronische Post aus irgend einem Grund (Ferien etc.) nicht bearbeiten kann, nicht einfach ungelesen liegenbleiben müssen, ist gewährleistet, dass auch vom Adressaten bezeichnete Stellvertreter die Nachrichten trotz Verschlüsselung lesen können. Gemäss der Erfindung definiert zu diesem Zweck jeder Benutzer des E-Mailsystems seinen oder seine Stellvertreter und macht diese Liste öffentlich zugänglich. Unter Verwendung eines herkömmlichen Hybridverfahrens wird die Nachricht mit einem vom Absender erzeugten Sessionkey und der Sessionkey mit dem öffentlichen Schlüssel des Adressaten verschlüsselt. Erfindungsgemäss wird der Sessionkey aber nun zusätzlich auch mit dem oder den öffentlichen Schlüsseln des oder der Stellvertreter verschlüsselt, womit auch diese in der Lage sind, die Nachricht zu entschlüsseln. Dabei wird der öffentliche Schlüssel eines Benutzers jeweils vom Key-Server zur Verfügung gestellt.

Bei den herkömmlichen Verfahren wurde eine Nachricht für jeden Empfänger, d.h. also auch für jeden einzelnen Stellvertreter separat verschlüsselt. Weil jede dieser verschlüsselten Nachrichten anders aussieht als die anderen und mithin von keinem anderen gelesen werden konnte, musste sie sowohl dem Adressaten, als auch allen Stellvertretern separat zugestellt werden. Mit dem erfindungsgemässen Verfahren wird die Nachricht sowohl für den Adressaten als auch für seine Stellvertreter zusammen verschlüsselt, was eine einzige verschlüsselte Nachricht zur Folge hat, die sowohl der Adressat, als auch alle Stellvertreter mit ihrem jeweiligen PIK entziffern können. Vorzugsweise wird nun diese verschlüsselte Nachricht einzig und allein an den Adressaten geschickt. Damit kann die Belastung des Netzwerkes, über welches die Nachrichten versendet werden, und die Überflutung der Mailboxen enorm reduziert werden.

Da ein Stellvertreter solche Nachrichten nicht mehr in sein eigenes Postfach zugeschickt erhält, bekommt er vom Mailsystem das Recht, auf die Mailbox des Adressaten der Nachricht zuzugreifen. Somit kann er die Nachrichten, für die er als Stellvertreter des Empfängers eingetragen ist und deren Sessionkeys auch mit seinem PUK verschlüsselt wurden, mit seinem PIK entschlüsseln und lesen.

Eine bevorzugte Ausführungsform der Erfindung besteht darin, dass die Liste der Stellvertreter der einzelnen Systembenutzer von diesen an einen zentralen Stellvertreter-Server geschickt werden. Dieser speichert alle Stellvertreterlisten zentral ab und stellt sie allen anderen Systembenutzern zur Einsicht zur Verfügung. Eine weitere Möglichkeit besteht darin, dass der Stellvertreter-Server die einzelnen Stellvertreterlisten in einer eigenen Liste zusammenfasst und nur diese Liste veröffentlicht. Möchte ein Systembenutzer zusätzliche Stellvertreter definieren oder bereits definierte Stellvertreter aus seiner Liste streichen, so trägt er diese Änderungen in seiner eigenen Liste ein und schickt sie wiederum an den Stellvertreter-Server, welcher die von ihm verwalteten Listen entsprechend nachführt. Wenn aber z.B. nur ein zusätzlicher Stellvertreter definiert oder nur einer von mehreren, bereits früher definierten Stellvertretern aus der Liste gestrichen werden soll, so kann natürlich auch nur diese eine Änderung dem Stellvertreter-Server mitgeteilt werden, der dann den entsprechenden Stellvertreter hinzufügt oder streicht und die Liste aktualisiert.

Sind die Listen mit den von jedem E-Mailsystembenutzer definierten Stellvertretern auf einem zentralen Stellvertreter-Server abgespeichert und veröffentlicht, muss sich der Benutzer keine Gedanken darüber machen, ob nun für den Adressaten seiner Nachricht ein Stellvertreter definiert ist oder nicht. Er wählt aus einer Benutzerliste einfach den oder die Adressaten aus und adressiert seine Nachricht mit deren Adresse wie er es gewohnt ist. Danach wird die Nachricht mit dem zuvor generierten Sessionkey verschlüsselt. Das E-Mailsystem prüft darauf anhand der Stellvertreterliste auf dem Stellvertreter-Server, ob für einen der Adressaten einer oder auch mehrere Stellvertreter definiert sind und verschlüsselt den Sessionkey im Bedarfsfall automatisch nicht nur mit dem PUK des oder der Adressaten, sondern auch mit jenem bzw. jenen des oder der Stellvertreter.

Dieses Verfahren bedingt eine dauernde Verbindung des E-Mailsystembenutzers zum Stellvertreter-Server. Manchmal ist es aber auch notwendig, dass diese Verbindung unterbrochen wird. Besitzt beispielsweise ein Benutzer ein Laptop, mit dem er auf Reisen geht, kann das System nicht mehr auf den Stellvertreter-Server zugreifen, wenn der Benutzer eine verschlüsselte Nachricht verschicken möchte.

Gemäss einer bevorzugten Ausführungsform der Erfindung werden zu diesem Zweck einerseits einige oder alle Stellvertreterlisten vom Stellvertreter-Server und andererseits die Liste mit den PUKs einiger oder aller Systembenutzer vom Key-Server heruntergeladen und beides lokal auf dem Laptop abgespeichert, bevor die Verbindung zum System getrennt wird. Damit wird dem Benutzer ermöglicht, offline E-Mails zu erfassen und zum Versand bereitzulegen.

Aus Sicherheitsgründen werden solche offline erfassten E-Mails nicht einfach lokal abgespeichert, sondern jede Nachricht wird fixfertig für den Versand vorbereitet und erst dann lokal zwischengespeichert. Zuerst wird die Nachricht daher mit einem zuvor generierten Sessionkey verschlüsselt. Aus der lokalen Kopie der Stellvertreterliste werden die Stellvertreter der Adressaten und aus der lokalen Kopie der PUK-Liste vom Key-Server die benötigten PUKs der Stellvertreter ermittelt. Anschliessend wird der Sessionkey mit allen notwendigen PUKs verschlüsselt und die Nachricht zusammen mit dem verschlüsselten Sessionkey in der Outbox des Benutzers abgelegt. Sobald wieder eine Verbindung zum E-Mailsystem besteht, werden alle Nachrichten in der Outbox automatisch versandt.

Eine weitere Möglichkeit für einen offline-Benutzer, erfindungsgemässe Nachrichten zu versenden, besteht darin, dass er jedesmal, wenn er eine verschlüsselte Nachricht versenden möchte, eine temporäre Verbindung zum E-Mailsystem und damit sowohl zum Stellvertreter- als auch zum Key-Server aufbaut und nach der Verschlüsselung seiner Nachricht diese sofort abschickt. Da dabei nur verschlüsselte oder nicht sensitive Informationen übertragen werden, ist die Art der Verbindung im Prinzip unerheblich, zumal jede zu übermittelnde Nachricht auch digital unterschrieben werden kann.

Eine weitere bevorzugte Ausführungsform der Erfindung beinhaltet die Zertifizierung der Systembenutzer durch ein zentrales Mailmanagement, welches im Kreis der Systembenutzer allgemein anerkannt ist und seinerseits ein PUK/PIK-Schlüsselpaar besitzt. Dabei wird zuerst die Identität eines Benutzers überprüft. Dann wird entweder ein PUK/PIK-Schlüsselpaar für diesen Benutzer erzeugt oder ein schon vorhandenes verwendet. Wurden die Schlüssel vom Mailmanagement erzeugt, wird der PIK dem Benutzer auf einem sicheren Weg zugestellt. Dazu wird er z.B. auf einer Chipkarte abgespeichert und dem Benutzer persönlich übergeben. Die Zertifizierung des PUKs eines Benutzers geschieht nun, indem der PUK zusammen mit gewissen Angaben über die Identität des Benutzers vom Mailmanagement mit dem eigenen PIK digital unterschrieben wird. Das so erhaltene Schlüsselzertifikat des Benutzers wird nebst dem PUK selber veröffentlicht. Mit dem PUK des Mailmanagements, der natürlich auch veröffentlicht wurde, kann nun jeder Systembenutzer das Schlüsselzertifikat eines anderen Benutzers überprüfen und dessen Identität verifizieren.

Damit die Stellvertreterlisten auf dem Weg vom Benutzer zum Stellvertreter-Server oder gar auf dem Server selber nicht manipuliert werden können, werden sie vom Benutzer digital unterschrieben. Damit wird erreicht, dass niemand ausser einem Benutzer selber seine Stellvertreter-Definition ändern kann. Erstellt der Stellvertreter-Server eine eigene zentrale Stellvertreterliste, ist es auch möglich, dass beispielsweise das Mailmanagement diese zentrale Stellvertreterliste unterschreibt, womit auch das Mailmanagement in der Lage wäre, die Stellvertreter-Definition eines Benutzers gültig zu verändern.

Ein E-Mailsystem zur erfindungsgemässen elektronischen Datenübertragung umfasst mindestens einen E-Mailclient pro Benutzer sowie einen Stellvertreter-Server. Ein E-Mailsystem kann im Allgemeinen aber noch weitere Komponenten aufweisen wie einen Mail-Server, auf dem die Mailboxen und die E-Mailadressen der Benutzer liegen, oder optional auch eine Certification Authority, die die Schlüsselzertifikate für die Benutzer ausstellt und diese auf einem sogenannten Certification-Server veröffentlicht. Diese Komponenten sind jedoch an sich bekannt und im Zusammenhang mit der Erfindung nicht von zentraler Bedeutung . Sie werden an dieser Stelle deshalb nicht näher beschrieben.

Jeder E-Mailclient besitzt eine Verschlüsselungseinheit, mit der er sowohl die Nachricht mit dem zuvor erzeugten Sessionkey, als auch den Sessionkey mit dem PUK des oder der Adressaten verschlüsseln kann. Ebenso wird der Sessionkey auch zumindest mit dem PUK eines vom Adressaten definierten Stellvertreters verschlüsselt. Dazu kann entweder dieselbe Verschlüsselungseinheit verwendet werden oder eine zusätzliche vorgesehen sein. Danach fügt der E-Mailclient die verschlüsselte Nachricht und den verschlüsselten Sessionkey aneinander und versendet beides zusammen an den oder die spezifizierten Adressaten. Um die Listen mit den von jedem Benutzer definierten Stellvertretern zentral abzuspeichern und zu verwalten, ist ein Stellvertreter-Server vorgesehen. Jeder E-Mailclient hat Zugriff auf diesen Server und kann daher für jeden Benutzer des E-Mailsystems feststellen, welche Stellvertreter dieser aktuell definiert hat.

Das E-Mailsystem kann zusätzlich noch einen Anwenderdaten-Server aufweisen. Auf diesem ist eine Liste abgespeichert, in die alle Benutzer des E-Mailsystems zusammen mit ihrem PUK eingetragen werden. Es ist möglich, dass der Anwenderdaten-Server nicht nur zur Speicherung der PUKs der Benutzer, sondern auch zur Speicherung weiterer Benutzerdaten wie z.B. der E-Mailadresse der Zertifikate und/oder der Stellvertreterlisten dient.

Der E-Mailclient umfasst typischerweise noch weitere Komponenten. So enthält er z.B. Mittel zum Versenden der zuvor vom Benutzer erzeugten Stellvertreterliste an den Stellvertreter-Server, eine Sessionkey-Erzeugungseinheit, je eine Abfrageeinheit zum Abfragen der aktuellen Stellvertreter und zum Abfragen des PUKs eines Benutzers, sowie Mittel zum Lesen, Herunterladen und Abspeichern der auf dem Stellvertreter-Server abgelegten Stellvertreterliste und der auf dem Anwenderdaten-Server abgelegten Liste mit den PUKs der Benutzer.

Ein Server braucht nicht unbedingt eine eigenständige Hardware-Komponente zu sein. Ein einzelner Computer kann also durchaus mehrere (softwaremässig implementierte) Server-Funktionen ausüben. Das heisst, dass unter Stellvertreter-Server, Anwenderdaten-Server, Zertifikat-Server etc. auch rein logische Funktionalitäten verstanden werden können.

Selbstverständlich können auch beliebige Kombinationen hardwaremässiger und logischer Implementationen gemacht werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Diagramm eines E-Mailsystems,
- Fig. 2: ein Blockschaltbild eines E-Mailclients.

Grundsätzlich sind in den Figuren gleiche Teile mit gleichen Bezugszeichen versehen.

### Wege zur Ausführung der Erfindung

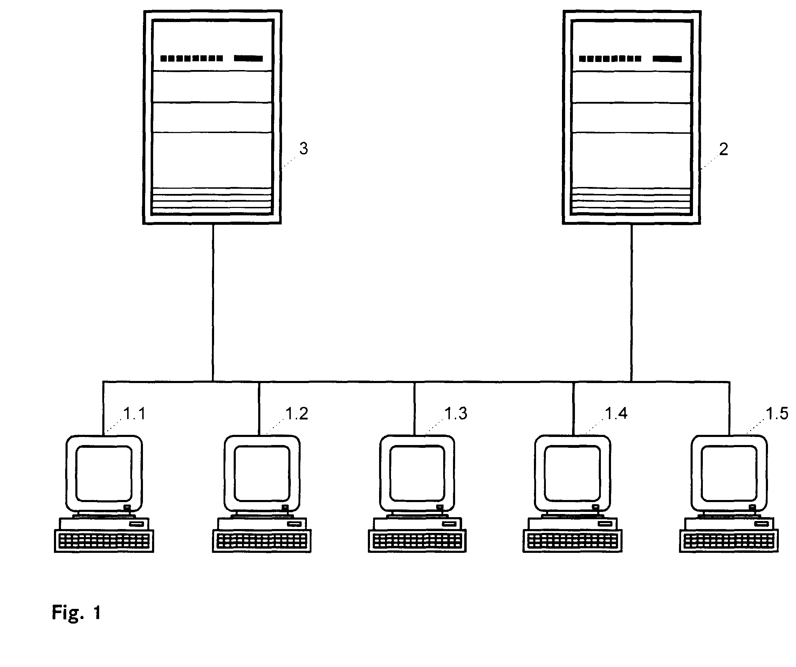

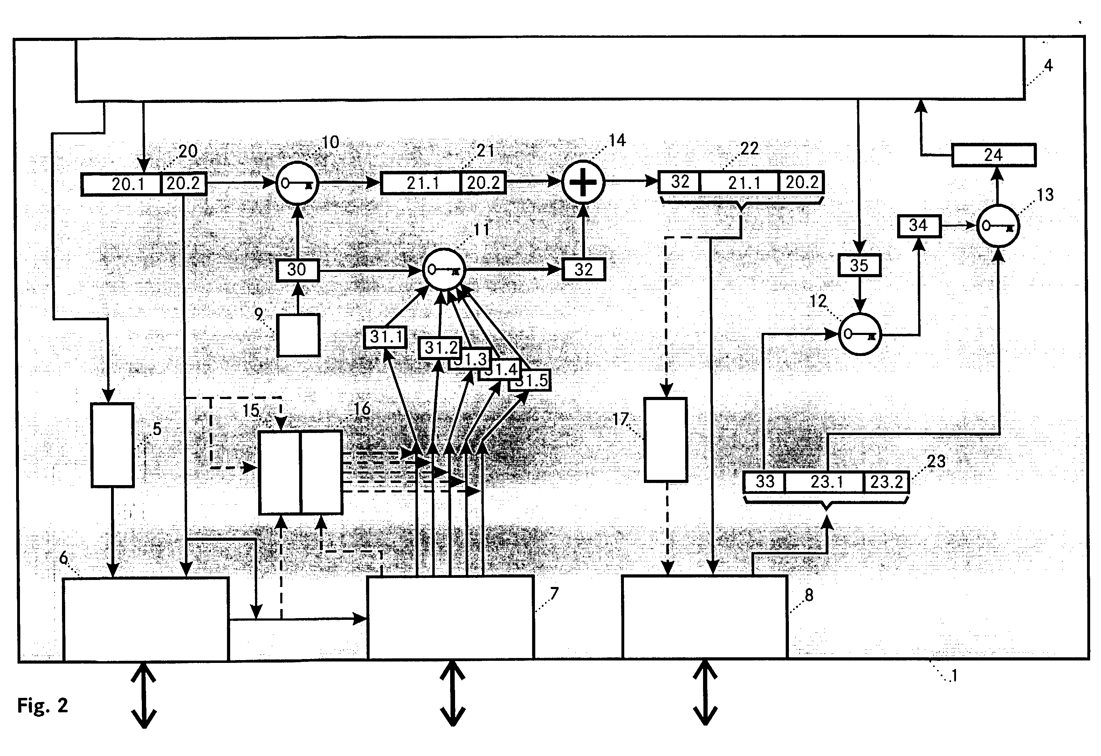

Anhand des in den beiden Figuren 1 und 2 dargestellten Ausführungsbeispiels soll das erfindungsgemässe Verfahren zur kryptographisch gesicherten Datenübertragung näher erläutert werden.

Figur 1 zeigt ein E-Mailsystem mit einem Anwenderdaten-Server 2, einem Stellvertreter-Server 3 und mehreren E-Mailclients 1.1 bis 1.5. Dabei darf das Wort E-Mailclient nicht in Form einer Person verstanden werden, sondern vielmehr als hardware- oder softwaremässig implementiertes Werkzeug, das einem Benutzer den Zugriff auf ein solches E-Mailsystem ermöglicht. Ein Benutzer kann nämlich durchaus über mehrere E-Mailclients mit anderen Benutzern bzw. deren E-Mailclients kommunizieren oder es ist keine Person, sondern vielmehr eine bestimmte Funktion in einem Netzwerk, die über ihren E-Mailclient Nachrichten austauscht.

Die E-Mailclients 1.1 bis 1.5 sind mit dem Anwenderdaten-Server 2 und dem Stellvertreter-Server 3 über ein beliebiges Netzwerk verbunden. Ein solches Netzwerk erlaubt in den meisten Fällen keine geschützte Daten-Übertragung von einem E-Mailclient zum anderen, d.h. die übertragenen Daten können von Dritten mitgehört, aufgezeichnet oder gar verändert werden. Deshalb werden E-Mails, die einen sensitiven Inhalt aufweisen, vor der Übertragung verschlüsselt, um z.B. zu gewährleisten, dass der Inhalt der E-Mail vertraulich bleibt, d.h. nur vom Adressaten gelesen bzw. entziffert werden kann.

Zur Verschlüsselung wird ein Hybridverfahren eingesetzt. Dabei wird die Nachricht zuerst mit einem beliebigen, meist vom E-Mailclient mit Hilfe von Zufallszahlen selber erzeugten, Sessionkey verschlüsselt. Die Nachricht kann jetzt nur mit dem gleichen Sessionkey auch wieder entschlüsselt werden. Um den Sessionkey sicher, d.h. ohne dass irgendwelche Dritte davon Kenntnis erlangen, zum Adressaten der Nachricht zu bringen, wird der Sessionkey mit einem der beiden Schlüssel eines komplementären Schlüsselpaares verschlüsselt und kann dann einzig und allein mit dem anderen Schlüssel dieses Schlüsselpaares wieder entschlüsselt werden. Zur Verschlüsselung wird der PUK des Adressaten und zur Entschlüsselung dessen PIK verwendet. Hierbei ist wohl die Vertraulichkeit, nicht aber Authentizität und Integrität gewährleistet. Deshalb kann die Nachricht zusätzlich noch digital vom Absender unterschrieben werden. Dazu wird zuerst ein digitaler Fingerabdruck der (noch nicht mit dem Sessionkey verschlüsselten) Nachricht erstellt, indem aus der Nachricht ein Hashcode errechnet wird, der unabhängig von der Länge der Nachricht immer gleich lang ist. Dieser Hashcode wird nun mit dem PIK des Absenders verschlüsselt, was die Signatur ergibt. Diese wird an die Nachricht angehängt und das Ganze wird mit dem Sessionkey verschlüsselt. Schliesslich wird noch der Sessionkey mit dem bzw. den PUK(s) des bzw. der Adressaten verschlüsselt. Die übermittelte Nachricht besteht demzufolge aus der signierten und verschlüsselten Nachricht und dem verschlüsselten Sessionkey.

Nach Empfang der Nachricht wird zuerst die übermittelte Nachricht in die beiden Bestandteile "signierte und verschlüsselte Nachricht" und "verschlüsselter Sessionkey" aufgetrennt. Danach wird der verschlüsselte Sessionkey mit dem PIK des Adressaten entschlüsselt. Mit dem Sessionkey wird einerseits die Nachricht selber und andererseits die Signatur der Nachricht entschlüsselt. Letztere wird nun mit dem PUK des Absenders dechiffriert, was den mitgesendeten Hashcode ergibt. Gleichzeitig wird aus der empfangenen und entschlüsselten Nachricht der Hashcode selber errechnet. Stimmen die beiden unabhängig berechneten Hashcodes überein, kann der Adressat sicher sein, dass die Nachricht erstens vom richtigen Absender stammt, denn sonst hätte er den mitgelieferten Hashcode nicht mit dem PUK des vermuteten Absenders entschlüsseln können, und sie zweitens unterwegs nicht verändert wurde, denn dann hätte seine Hashcode-Berechnung einen anderen Wert ergeben. Sind die PUKs der Benutzer auch noch durch eine allgemein anerkannte Certification Authority zertifiziert, ist eine grösstmögliche Sicherheit gewährleistet.

Damit jeder Benutzer an jeden anderen eine verschlüsselte Nachricht senden kann, ist der PUK jedes Benutzers auf dem Anwenderdaten-Server 2 veröffentlicht.

Ist nun aber der Adressat einer Nachricht längere Zeit abwesend, weil er sich z.B. auf einer Geschäftsreise befindet, dürfen solche Nachrichten nicht einfach liegen bleiben. Zu diesem Zweck kann jeder Benutzer mit Hilfe seines E-Mailclients 1.1 bis 1.5 einen oder mehrere Stellvertreter definieren, welche in einer Liste eingetragen und im E-Mailclient 1.1 bis 1.5 abgespeichert werden. Jeder E-Mailclient 1.1 bis 1.5 übermittelt nun diese Liste mit den Stellvertretern seines Benutzers an den Stellvertreter-Server 3, welcher diese Liste veröffentlicht.

Figur 2 zeigt einen E-Mailclient 1 zur Durchführung des erfindungsgemässen Verfahrens. Der E-Mailclient 1 umfasst folgende Komponenten: eine Benutzer-Schnittstelle 4, einen Speicher 5 für die Stellvertreterliste des eigenen Benutzers, drei Sende/Empfangseinheiten 6, 7, 8, einen Sessionkey-Generator 9, zwei Verschlüsselungseinheiten 10, 11, zwei Entschlüsselungseinheiten 12, 13, eine Additionseinheit 14, sowie zwei weitere Speicher 15, 16, einen für die Stellvertreterlisten aller Benutzer und einen für die Liste mit den benötigten PUKs der gewünschten Benutzer sowie einen Sendespeicher 17 für die Zwischenspeicherung zu sendender, verschlüsselter E-Mails 22 bei offline-Betrieb.

Wenn ein Benutzer möchte, dass auch andere Benutzer seine elektronische Post einsehen können, muss er zuerst seine Stellvertreter definieren. Dies kann ein einzelner Stellvertreter für seine ganze Post sein, es können aber auch mehrere Stellvertreter definiert werden, wovon jeder nur einen Teil seiner Post erledigt. Diese Stellvertreter trägt der Benutzer in eine Liste ein, welche sein E-Mailclient 1 im entsprechenden Speicher 5 ablegt. Danach übermittelt der E-Mailclient 1 diese Liste via Sende/Empfangseinheit 6 an den Stellvertreter-Server 3. Dieser verwaltet zentral die verschiedenen Stellvertreterlisten mit den aktuell definierten Stellvertretern jedes einzelnen Benutzers, in welche er neu definierte Stellvertreter einträgt oder gestrichene Stellvertreter löscht.

Nachfolgend wird im Detail erläutert, wie die kryptographisch gesicherte Übermittlung einer Nachricht von einem Benutzer, im folgenden Absender genannt, zu einem anderen Benutzer, im folgenden Adressat genannt, erfolgt. Der Absender erfasst via Benutzer-Schnittstelle 4 seines E-Mailclients 1 die zu übermittelnden Daten 20.1. Diesen Daten 20.1 fügt er wie gewohnt die Adresse 20.2 (z.B. die E-Mailadresse) des Adressaten an. Der E-Mailclient 1 fügt dann beides zur Nachricht 20 zusammen. Nun erzeugt der Sessionkey-Generator 9 mit Hilfe von Zufallszahlen in an sich bekannter Weise einen beliebigen Sessionkey 30. Mit dem Sessionkey 30 wird die Nachricht 20 in der Verschlüsselungseinheit 10 verschlüsselt, was die verschlüsselte Nachricht 21 ergibt, welche aus den verschlüsselten Daten 21.1 und der weiterhin unverschlüsselten Adresse 20.2 besteht. Unterdessen holt sich der E-Mailclient 1 vom Stellvertreter-Server die aktuelle Stellvertreter-liste des Adressaten und damit die PUKs der Stellvertreter vom Anwenderdaten-Server. Dazu sendet er die eingetragene Adresse 20.2 via Sende/Empfangseinheit 6 zum Stellvertreter-Server. Dieser schickt die Liste mit den eingetragenen Stellvertretern zurück, welche der E-Mailclient 1 zusammen mit der Adresse 20.2 des Adressaten gleich via Sende/Empfangseinheit 7 an den Anwenderdaten-Server weiterleitet, der ihm die zugehörigen PUKs 31.1 bis 31.5 liefert. Mit diesen PUKs 31.1 bis 31.5 wird nun in der Verschlüsselungseinheit 11 der Sessionkey 30 verschlüsselt. So erhält man den verschlüsselten Sessionkey 32. Die E-Mail 22, die schliesslich via Sende/Empfangseinheit 8 verschickt wird, erzeugt der E-Mailclient 1, indem er in der Additionseinheit 14 einfach den verschlüsselten Sessionkey 32 an die verschlüsselte Nachricht 21 anhängt.

Der umgekehrte Prozess läuft ab, wenn der E-Mailclient 1 eine verschlüsselte E-Mail 23 eines anderen Benutzers erhält. Diese besteht aus dem verschlüsselten Sessionkey 33, den verschlüsselten Daten 23.1 und der Adresse 23.2 des Benutzers des E-Mailclients 1. Mit dem PIK 35 des Benutzers entschlüsselt der E-Mailclient 1 in der Entschlüsselungseinheit 12 den Sessionkey 34, mit welchem er in der Entschlüsselungseinheit 13 die verschlüsselten Daten 23.1 dechiffriert. Dann gibt er die entschlüsselten Daten 24 an den Benutzer aus. Auf dieselbe Art entschlüsselt ein Stellvertreter die E-Mail 23, für die er als Stellvertreter in der Liste eingetragen ist und die demzufolge auch mit seinem PUK verschlüsselt wurde. Er greift auf die Mailbox des Adressaten zu und benutzt zum Entschlüsseln des Sessionkeys 30 einfach seinen eigenen PIK , da er jenen des Adressaten ja nicht kennt.

Für den offline-Betrieb des E-Mailclients 1, d.h. ohne permanente Verbindung zum Mail- und Stellvertreter-Server, sind drei zusätzliche Speicher 15, 16 17 vorgesehen. Der Benutzer, der z.B. das Laptop, auf dem sein E-Mailclient 1 implementiert ist, mit auf Reisen nimmt, kann dadurch wie gewohnt seine Nachrichten 20 erfassen, verschlüsseln und, sobald sein E-Mailclient 1 wieder eine Verbindung zum Netz hat, versenden. Wie dies genau abläuft, wird im folgenden kurz erläutert. Bevor der Benutzer bzw. sein E-Mailclient 1 in den offline-Betrieb übergeht, lädt dieser via Sende/Empfangseinheit 6 die gewünschten Stellvertreterlisten vom Stellvertreter-Server und via Sende/Empfangseinheit 7 die benötigten PUKs vom Anwenderdaten-Server herunter und speichert die Listen im entsprechenden Speicher 15 resp. 16 lokal ab. Die zugehörigen Verbindungen in der Figur 2 sind gestrichelt eingezeichnet. Die vom Benutzer offline erfasste Nachricht 20 wird nun genau gleich verschlüsselt wie im online-Betrieb, mit dem Unterschied, dass sowohl die Stellvertreter des mit der Adresse 20.2 spezifizierten Adressaten, als auch die PUKs der Stellvertreter, mit denen der Sessionkey 30 verschlüsselt wird, nicht von den entsprechenden Servern, sondern aus den lokalen Speichern 15 bzw. 16 gelesen werden. Auch diese Verbindungen sind gestrichelt dargestellt. Die so verschlüsselte E-Mail 22 kann jedoch wegen der fehlenden Verbindung zum System nicht sofort abgeschickt werden, weshalb sie im Sendespeicher 17 zwischengespeichert und erst später verschickt wird, wenn wieder eine Verbindung zum System besteht.

Als E-Mailclient 1 wird vorzugsweise ein bekannter E-Mailclient 1 verwendet und um die erforderlichen Funktionen erweitert. Der Benutzer kann damit Nachrichten 20 wie gewohnt erstellen, d.h. die Daten 20.1 erfassen, je nach Bedarf Dateien als Anhang hinzufügen, die Adressen 20.2 der gewünschten Adressaten in das Adressfeld eintragen und die Nachricht unverschlüsselt versenden. Durch auswählen entsprechender Menueinträge bzw. durch anklicken entsprechender Schaltflächen kann nun aber der Benutzer wählen, ob er die Nachricht 20 verschlüsseln und/oder digital unterschreiben möchte. Dann drückt er lediglich noch den "send"-Button seines E-Mailclients 1. Da die Stellvertreterlisten und die PUKs aller Benutzer zentral veröffentlicht bzw. lokal abgespeichert sind, kann der E-Mailclient 1 ohne weitere Benutzerinteraktion automatisch die Stellvertreter und deren PUKs aus diesen Listen abrufen, die Nachricht 20 verschlüsseln und anschliessend verschicken. Der E-Mailclient 1 kann aber auch derart implementiert oder eingestellt sein, dass er dem Benutzer die Möglichkeit gibt, für die Stellvertreter festzulegen, ob die Nachricht auch mit deren PUKs verschlüsselt werden soll oder nicht. Dazu zeigt ihm der E-Mailclient 1 z.B. ein Fenster mit der Liste der Stellvertreter des Adressaten an. Ob eine Nachricht mit dem PUK eines Benutzers aber überhaupt verschlüsselt werden kann oder nicht, kann auch davon abhängig gemacht werden, dass der PUK eines Benutzers z.B. vom Mailmanagement oder einer anderen, akzeptierten Certification Authority zertifiziert ist.

Zusammenfassend ist festzustellen, dass es die Erfindung einem Systembenutzer erlaubt, auch in einem unsicheren Netzwerk wie z.B. dem Internet, kryptographisch gesicherte E-Mails an einen anderen Systembenutzer zu senden, ohne dass er sich darum kümmern muss, ob und wenn ja welche Stellvertreter der Adressat der E-Mail definiert hat. Er kann davon ausgehen, dass eine verschlüsselte Nachricht auch dann gelesen und verarbeitet werden kann, wenn sich der Adressat z.B. auf einer Geschäftsreise befindet.

## Patentansprüche

1. Verfahren zur Übertragung elektronischer Nachrichten zwischen Benutzern eines E-Mailsystems, wobei zur Gewährleistung von Vertraulichkeit, Authentizität und Integrität seitens eines Absenders die Nachricht mit einem Sessionkey verschlüsselt wird, der seinerseits mit einem öffentlichen Schlüssel eines Adressaten verschlüsselt und mit der Nachricht an den Adressaten mitgeschickt wird, dadurch gekennzeichnet, dass dem Absender vom E-Mailsystem eine Stellvertreter-Liste mit den vom Adressaten definierten Stellvertretern und deren öffentlichen Schlüssel bereitgestellt wird und dass der Sessionkey zusätzlich mit dem öffentlichen Schlüssel mindestens eines Stellvertreters verschlüsselt wird.

2. Verfahren nach Anspruch 1, dadurch gekennzeichnet, dass die verschlüsselte Nachricht nur an den Adressaten und nicht an dessen Stellvertreter geschickt wird.

3. Verfahren nach Anspruch 1 oder 2, dadurch gekennzeichnet, dass der mindestens eine Stellvertreter auf eine Mailbox des Adressaten zugreift, den Sessionkey der geschickten Nachricht mit seinem eigenen privaten Schlüssel entschlüsselt und mit dem Sessionkey schliesslich die Nachricht entschlüsselt.

4. Verfahren nach einem der Ansprüche 1 bis 3, dadurch gekennzeichnet, dass alle Benutzer ihre Stellvertreter-Liste mit den von ihnen definierten Stellvertretern zur zentralen Verwaltung an einen Stellvertreter-Server schicken, welcher diese abspeichert undallen Benutzern zugänglich macht.

5. Verfahren nach Anspruch 4, dadurch gekennzeichnet, dass das E-Mailsystem unmittelbar vor dem Versenden einer verschlüsselten Nachricht die Stellvertreter des Adressaten und deren öffentliche Schlüssel aus den Stellvertreter-Listen des Stellvertreter-Servers ausliest, und den Sessionkey mit den öffentlichen Schlüsseln der Stellvertreter des Adressaten der Nachricht verschlüsselt.

6. Verfahren nach Anspruch 4, dadurch gekennzeichnet, dass die vom Stellvertreter-Server zentral verwalteten Stellvertreterlisten und die öffentlichen Schlüssel der Benutzer auf einen Computer des Absenders übertragen und dort für eine offline-Verwendung lokal abgespeichert werden.

7. Verfahren nach Anspruch 6, dadurch gekennzeichnet, dass die Stellvertreter des Adressaten und deren öffentliche Schlüssel aus der lokal abgespeicherten Stellvertreter-Liste ausgelesen, der Sessionkey der zu versendenden Nachricht mit diesen öffentlichen Schlüsseln verschlüsselt und die verschlüsselte, zum Versand bereite Nachricht bis zum Versand lokal zwischengespeichert werden.

8. Verfahren nach einem der Ansprüche 1 bis 7, dadurch gekennzeichnet, dass ein zentrales Mailmanagement die Benutzer des E-Mailsystems registriert, deren Identität überprüft, für jeden den öffentlichen wie auch den privaten Schlüssel erzeugt, den privaten Schlüssel dem Benutzer auf einem sicheren Weg zukommen lässt, den öffentlichen Schlüssel zertifiziert und das so entstandene Schlüsselzertifikat jedes Benutzers allen anderen Benutzern des E-Mailsystems zugänglich macht.

9. Verfahren nach Anspruch 8, dadurch gekennzeichnet, dass eine von einem Benutzer an den Stellvertreter-Server gesandte Mitteilung mit seinen Stellvertretern durch die digitale Unterschrift des Benutzers zertifiziert wird.

10. E-Mailsystem zur Durchführung des Verfahrens nach Anspruch 1 mit mindestens einem E-Mailclient pro Benutzer, wobei der E-Mailclient eine Verschlüsselungseinheit zum Verschlüsseln der E-Mail mit einem Sessionkey und zum Verschlüsseln des Sessionkeys mit einem public Key eines Adressaten aufweist, dadurch gekennzeichnet, dass ein Stellvertreter-Server vorhanden ist, der die Stellvertreterliste des Adressaten abspeichert, und dass im E-Mailclient eine Stellvertreter-Verschlüsselungseinheit vorgesehen ist, die den Sessionkey zumindest mit einem public key mindestens eines im Stellvertreter-Server abgespeicherten Stellvertreters verschlüsselt und der E-Mail zufügt.

11. E-Mailsystem nach Anspruch 10, dadurch gekennzeichnet, dass es einen Anwenderdaten-Server beinhaltet, wo jeder Benutzer zusammen mit seinem öffentlichen Schlüssel registriert ist und der E-Mailclient Mittel aufweist
- zum Generieren des Sessionkeys,
- zum Senden der Stellvertreterliste des Benutzers an den Stellvertreter-Server,
- zum Abfragen der aktuellen Stellvertreter eines Benutzers vom Stellvertreter-Server,
- zum Abfragen des öffentlichen Schlüssels eines Benutzers vom Anwenderdaten-Server,
- zum Herunterladen der auf dem Stellvertreter-Server gespeicherten Stellvertreter-listen,
- zum Herunterladen der öffentlichen Schlüssel der Benutzer vom Anwenderdaten-Server,
- zum Abspeichern der heruntergeladenen Daten.
